# EUROPEAN PATENT SPECIFICATION

(11) **EP 4 631 747 B1**
(45) Date of publication and mention of the grant of the patent: **02.12.2026**
(21) Application number: 23900312.2
(22) Date of filing: 13.10.2023
(51) Int. Cl.: B60C 11/24, B60C 99/00, G06N 20/00

(54) **TIRE WEAR STATE PREDICTION DEVICE, TIRE WEAR STATE PREDICTION METHOD, AND PROGRAM**
VORRICHTUNG ZUR VORHERSAGE DES REIFENVERSCHLEISSZUSTANDS, VERFAHREN ZUR VORHERSAGE DES REIFENVERSCHLEISSZUSTANDS UND PROGRAMM
DISPOSITIF DE PRÉDICTION D'ÉTAT D'USURE DE PNEU, PROCÉDÉ DE PRÉDICTION D'ÉTAT D'USURE DE PNEU ET PROGRAMME

(30) Priority: 07.12.2022 JP 2022195827
(43) Date of publication of application: 15.10.2025
(73) Proprietor: BRIDGESTONE CORPORATION, Chuo-ku Tokyo 104-8340 (JP)
(72) Inventor: OGASAWARA, Yusuke, Tokyo 104-8340 (JP)
(74) Representative: Marks & Clerk LLP
(86) International application number: PCT/JP2023/037292
(87) International publication number: WO 2024/122190

(56) References cited:
- EP-A1- 4 332 537
- WO-A1-2017/149954
- JP-A- 2013 113 724
- JP-A- 2019 200 136
- JP-A- 2021 526 476
- JP-A- 2021 533 029
- JP-A- 2022 063 581
- US-A1- 2021 188 017
- US-A1- 2021 245 554
- US-A1- 2021 394 562

## Description

### TECHNICAL FIELD

The present invention relates to a tire wear state prediction apparatus, a tire wear state prediction method, and a program.

### BACKGROUND

Technologies for predicting the wear state of tires are conventionally known. For example, Patent Literature (PTL) 1 discloses a tire wear amount estimation system using a computational model that receives input of at least the running distance of a vehicle as the running state of the vehicle and outputs the wear amount of a tire.

US 2021/188017 A1 relates to a tread wear monitoring method comprising a preliminary step and a tread wear monitoring step. The preliminary step includes: performing tread wear tests on one or more tires; measuring tread-wear-related quantities and first frictional-energy-related quantities, wherein the tread wear-related quantities are indicative of tread wear resulting from the performed tread wear tests, and the first frictional-energy-related quantities are related to frictional energy which the tested tire(s) is/are subject to during the performed tread wear tests; and determining a calibrated tread wear model based on the measured tread-wear-related and first frictional-energy-related quantities. The tread wear monitoring step includes: acquiring, from a vehicle bus of a motor vehicle equipped with two or more wheels fitted, each, with a tire, driving-related quantities related to driving of the motor vehicle; computing, based on the acquired driving-related quantities and a predefined vehicle dynamics model related to the motor vehicle, second frictional-energy-related quantities related to frictional energy experienced, during driving, by at least one tire of the motor vehicle; estimating, based on the second frictional-energy-related quantities and the calibrated tread wear model, tread wear experienced by said at least one tire of the motor vehicle during driving; and estimating a current average remaining tread material amount of said at least one tire of the motor vehicle based on the estimated tread wear. Additionally, the preliminary step further includes: determining, based on one or more of the measured tread-wear-related quantities, a first correction factor related to irregular tread wear due to tire features; and training an artificial neural network to provide second correction factors related to irregular tread wear due to tire usage. Finally, the tread wear monitoring step further includes: providing a second correction factor by means of the trained artificial neural network based on one or more of the acquired driving-related quantities; and computing a corrected remaining tread material amount based on the current average remaining tread material amount, the first correction factor and the second correction factor provided by the trained artificial neural network based on the one or more acquired driving-related quantities.

### CITATION LIST

### Patent Literature

PTL 1: JP 2022-133305 A

### SUMMARY

### (Technical Problem)

Further improvement in the usefulness of technology for predicting the wear state of tires is needed in recent years. For example, there is a demand to, instead of calculating the wear state of a tire directly from running data of a vehicle using a computational model as in PTL 1, calculate the wear state of a tire in a stepwise manner by generating intermediate data in the computation process to thus improve the accuracy and reliability of the calculated wear state.

It could therefore be helpful to provide a tire wear state prediction apparatus, tire wear state prediction method, and program that can improve the usefulness of technology for predicting the wear state of tires.

### (Solution to Problem)

The invention is as defined in the appended claims.

### (Advantageous Effect)

It is thus possible to provide a tire wear state prediction apparatus, tire wear state prediction method, and program that can improve the usefulness of technology for predicting the wear state of tires.

### BRIEF DESCRIPTION OF THE DRAWINGS

In the accompanying drawings:
FIG. 1 is a diagram illustrating the schematic structure of a tire wear state prediction system according to one embodiment of the present invention;
FIG. 2 is a block diagram illustrating the structure of a server illustrated in FIG. 1;
FIG. 3 is a flowchart illustrating an example of the operation of the server illustrated in FIG. 1;
FIG. 4 is a schematic diagram illustrating an external force acting on a tire mounted on a vehicle; and
FIG. 5 is a flowchart illustrating another example of the operation of the server illustrated in FIG. 1.

### DETAILED DESCRIPTION

A tire wear state prediction apparatus according to one embodiment of the present invention will be described below with reference to the drawings. In the drawings, the same or corresponding parts are given the same reference signs. In the description of this embodiment, the description of the same or corresponding parts will be omitted or simplified as appropriate.

### (Structure of tire wear state prediction system)

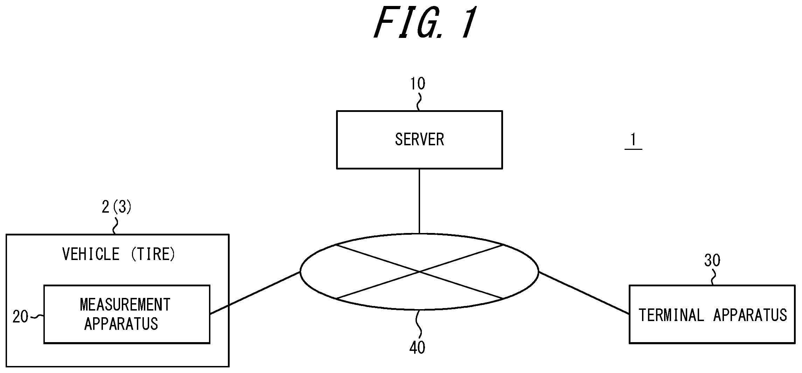

First, an overview of a tire wear state prediction system 1 according to this embodiment will be given with reference to FIG. 1. FIG. 1 is a diagram illustrating the schematic structure of the tire wear state prediction system 1. As illustrated in FIG. 1, the tire wear state prediction system 1 includes a server 10, a measurement apparatus 20, and a terminal apparatus 30. Although one server 10, one measurement apparatus 20, and one terminal apparatus 30 are illustrated in FIG. 1, the tire wear state prediction system 1 may include any number of servers 10, any number of measurement apparatuses 20, and any number of terminal apparatuses 30.

The server 10 is composed of one or more computers. In this embodiment, the server 10 is described as being composed of one computer. However, the server 10 may be composed of a plurality of computers, such as a cloud computing system. In the present invention, the server 10 is also referred to as a tire wear state prediction apparatus.

The measurement apparatus 20 is composed of one or more computers, such as a digital tachograph, a tire pressure monitoring system (TPMS), an electronic control unit (ECU), or a car navigation device. The measurement apparatus 20 generates at least one of running data (travel data) of a vehicle 2 on which a tire 3 is mounted or tire state data of the tire 3, and transmits it to the server 10 as time-series data. For this purpose, the measurement apparatus 20 may be installed on the vehicle 2 or the tire 3.

The running data of the vehicle 2 on which the tire 3 is mounted is, for example, time-series data of the speed, acceleration, load, running time, running distance, or running route of the vehicle 2 or the number of rotations of the tire 3. For example, the running data of the vehicle 2 may be generated by a digital tachograph. The running data of the vehicle 2 is not limited to these examples, and may include any data indicating the running state of the vehicle 2 on which the tire 3 is mounted.

The tire state data of the tire 3 is, for example, time-series data of the internal pressure (air pressure) or temperature of the tire 3. For example, the tire state data of the tire 3 may be generated by a TPMS. The tire state data of the tire 3 is not limited to these examples, and may include any data indicating the state of the tire 3.

The vehicle 2 is, for example, a truck. The vehicle 2 is not limited to a truck, and may be any vehicle on which the tire 3 can be mounted, such as a passenger vehicle, a construction vehicle, a work vehicle, a motorcycle, a bicycle, or an airplane.

The terminal apparatus 30 is, for example, a computer such as a smartphone, a tablet terminal, or a personal computer.

A network 40 is any communication network that allows the server 10, the measurement apparatus 20, and the terminal apparatus 30 to communicate with each other. The network 40 in this embodiment may be, for example, the Internet, a mobile communication network, a local area network (LAN), or a combination of these.

The tire wear state prediction system 1 is used to predict the wear state of one or more tires 3. In the tire wear state prediction system 1, for example, the server 10 acquires running data of the vehicle 2 on which the tire 3 is mounted from the measurement apparatus 20. The server 10 calculates wear energy data, which is time-series data about the wear energy of the tire 3, based on the running data of the vehicle 2. The server 10 then calculates the wear state of the tire 3 based on the wear energy data of the tire 3. The wear state of the tire 3 may be transmitted from the server 10 to the terminal apparatus 30 and displayed by the terminal apparatus 30. Thus, by calculating the wear energy of the tire 3 based on the data acquired from the measurement apparatus 20 and then predicting the wear state of the tire 3, it is possible to improve the accuracy and reliability of the calculated wear state of the tire 3. As a result, the usefulness of technology for predicting the wear state of the tire 3 can be improved.

Herein, the wear state of the tire 3 is an index representing the degree of wear of the tire 3 due to use of the tire 3. In the present invention, the remaining groove depth of the tread surface of the tire 3 is used as the wear state of the tire 3. For example, the remaining groove depth can be evaluated by the groove depth at a predetermined location on the tread surface of the tire 3 or the average value of the groove depth at a plurality of locations on the tread surface. The wear state of the tire 3 is, however, not limited to the remaining groove depth, and any index such as the wear amount of the tread surface of the tire 3 may be used. The wear energy of the tire 3 is expressed as the product of the slippage of the tread surface (particularly the block land portion) against the road surface and the shear force acting on the tread surface. The wear energy acting on one location on the tread surface of the tire 3 during one rotation of the tire 3 is given by the following formula (1):
[Math. 1] $Ew = {\int }_{0}^{2 π} τ \times sdθ$ (1) where Ew is the friction energy, τ is the shear force, s is the slippage, and θ is the amount of rotation of the tire 3. It is known that the wear energy and the wear amount of the tread surface correlate with each other. Hence, the wear state of the tire 3, such as the remaining groove depth of the tread surface of the tire 3, can be calculated based on time-series data of the wear energy acting on the tread surface of the tire 3.

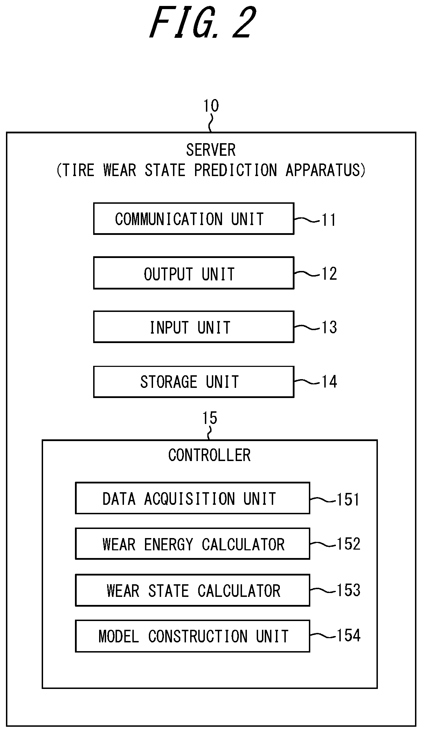

Next, the server 10, which is a tire wear state prediction apparatus, will be described in detail with reference to FIG. 2. FIG. 2 is a block diagram illustrating the structure of the server 10. As illustrated in FIG. 2, the server 10 includes a communication unit 11, an output unit 12, an input unit 13, a storage unit 14, and a controller 15. In the server 10, the communication unit 11, the output unit 12, the input unit 13, the storage unit 14, and the controller 15 are connected so as to be able to communicate with each other by wire or wirelessly.

The communication unit 11 includes a communication module for connecting to the network 40. The communication module is a communication module compatible with a mobile communication standard such as 4G (4th Generation) or 5G (5th Generation). The communication module may be a communication module compatible with a standard such as a wired LAN or a wireless LAN. The communication module may be a communication module compatible with a short-range wireless communication standard such as Wi-Fi^{®} (Wi-Fi is a registered trademark in Japan, other countries, or both), Bluetooth^{®} (Bluetooth is a registered trademark in Japan, other countries, or both), or infrared communication. In this embodiment, the server 10 is connected to the network 40 via the communication unit 11. This allows the server 10 to communicate with the measurement apparatus 20, the terminal apparatus 30, other computers, etc.

The output unit 12 includes one or more output devices. Examples of the output devices included in the output unit 12 include a display, a speaker, and a lamp. This allows the output unit 12 to output images, sounds, light, etc.

The input unit 13 includes one or more input devices. Examples of the input devices included in the input unit 13 include a touch panel, a camera, and a microphone. The input unit 13 receives, for example, input operations by a user of the server 10.

The storage unit 14 is, for example, a semiconductor memory, a magnetic memory, or an optical memory. The storage unit 14 functions, for example, as a main storage, an auxiliary storage, or a cache memory. The storage unit 14 stores any information used in the operation of the server 10. For example, the storage unit 14 stores a system program, an application program, embedded software, a database, etc. The information stored in the storage unit 14 may be updated, for example, with information acquired from the network 40 via the communication unit 11.

For example, the storage unit 14 may store tire identification information of each of one or more tires 3 to be measured by the measurement apparatus 20. The tire identification information of the tire 3 is information that can uniquely identify the tire 3. The tire identification information is, for example, an identifier (ID) of the tire 3 uniquely assigned by the server 10. The tire identification information is not limited to such, and may be, for example, the production number of the tire 3. The storage unit 14 may store information about the tire 3 in association with the tire identification information of the tire 3.

The controller 15 includes one or more processors. Examples of the processors include a general-purpose processor such as a central processing unit (CPU) and a dedicated processor specialized for specific processing. The controller 15 is not limited to one or more processors, and may include one or more dedicated circuits. Examples of the dedicated circuits include a field-programmable gate array (FPGA) and an application specific integrated circuit (ASIC). The controller 15 controls each of the foregoing components such as the communication unit 11, output unit 12, input unit 13, and storage unit 14 in order to achieve the functions of the server 10 including the functions of these components. In the present invention, the controller 15 controls the foregoing components in the server 10 and thus can operate as a data acquisition unit 151, a wear energy calculator 152, a wear state calculator 153, and a model construction unit 154 (described in detail later).

### (Operation of tire wear state prediction apparatus)

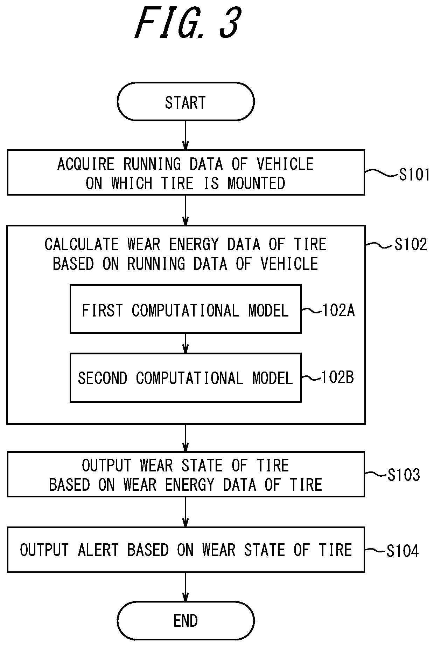

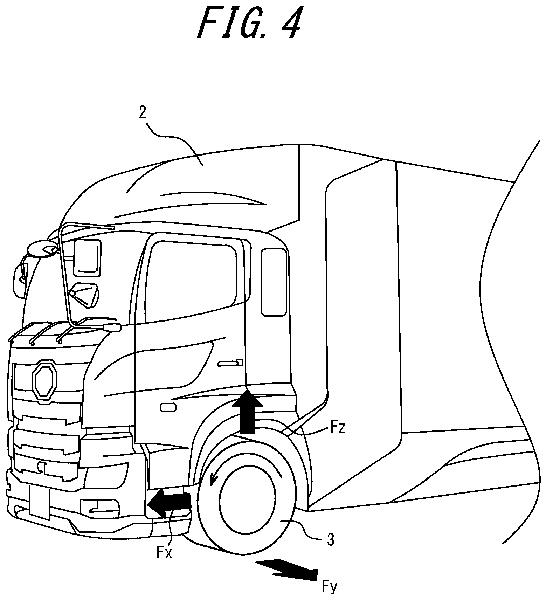

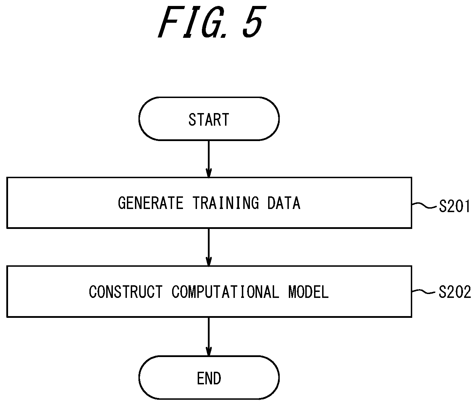

The operation of the server 10, which is a tire wear state prediction apparatus, will be described with reference to FIGS. 3, 4, and 5. FIG. 3 is a flowchart illustrating an example of the operation of the server 10. FIG. 4 is a schematic diagram illustrating an external force acting on the tire 3 mounted on the vehicle 2. FIG. 5 is a flowchart illustrating another example of the operation of the server 10. The operation of the server 10 is illustrated in the flowcharts in FIGS. 3 and 5. The described operation corresponds to a tire wear state prediction method executed by the server 10.

First, the operation of predicting the wear state of the tire 3 by the server 10 will be described with reference to FIG. 3.

In the description of the operation, it is assumed that the storage unit 14 in the server 10 stores the tire identification information of the tire 3 and information about the tire 3 associated with the tire identification information of the tire 3. The information about the tire 3 includes, for example, at least one of structure information of the tire 3, structure information of the vehicle 2 on which the tire 3 is mounted, or position information of the position of the tire 3 mounted on the vehicle 2. The structure information of the tire 3 is, for example, the type, model number, material property, belt angle, size, weight, etc. of the tire 3. The structure information of the tire 3 may also include production data specific to the tire 3, such as the length of the folded-up portion of the carcass (ply) or the belt width, measured by an X-ray inspection machine at the time of shipment of the tire 3 from the factory, for example. Even for tires 3 with the same model number, production data may differ due to production variation between the tires 3. Taking this into consideration can further improve the prediction accuracy of the wear state of the tire 3. The structure information of the vehicle 2 on which the tire 3 is mounted includes the type, model number, displacement, number of tires mounted, and number of shafts of the vehicle 2, the type of road surface on which the vehicle 2 mainly runs, etc.

In step S101, the controller 15 in the server 10 as the data acquisition unit 151 acquires running data of the vehicle 2 on which the tire 3 is mounted as time-series data.

For example, the controller 15 in the server 10 acquires the running data of the vehicle 2 on which the tire 3 is mounted from the measurement apparatus 20 via the communication unit 11. The controller 15 may store the acquired running data in the storage unit 14 as information about the tire 3.

In step S101, the controller 15 in the server 10 as the data acquisition unit 151 may acquire data other than the running data of the vehicle 2.

As one example, the controller 15 in the server 10 may acquire tire state data of the tire 3 as time-series data from the measurement apparatus 20 via the communication unit 11. As another example, the controller 15 may acquire outdoor temperature data from the measurement apparatus 20 or a weather information service via the communication unit 11. The outdoor temperature data is, for example, data of the air temperature, humidity, or precipitation at the location where the vehicle 2 on which the tire 3 is mounted is located.

As another example, the controller 15 may acquire an initial value of the wear state of the tire 3 from the terminal apparatus 30 via the communication unit 11. The initial value of the wear state of the tire 3 may be, for example, the wear state of the tire 3 in an unused state at the time of shipment from the factory, or the wear state of the tire 3 at a certain time point when the tire 3 is in use. In this operation example, the initial value of the wear state of the tire 3 is an initial value of the remaining groove depth of the tread surface of the tire 3. The initial value of the remaining groove depth of the tread surface may be an actual measured value, or the remaining groove depth of the tread surface calculated as a result of this operation at a certain time point in the past. The controller 15 may store the acquired data in the storage unit 14 in association with the tire identification information of the tire 3.

In step S102, the controller 15 in the server 10 as the wear energy calculator 152 calculates time-series data about the wear energy of the tire 3 based on the running data of the vehicle 2 on which the tire 3 is mounted. Hereinafter, the time-series data about the wear energy of the tire 3 is also referred to as the wear energy data of the tire 3.

The wear energy data of the tire 3 may include time-series data of wear energy acting on a predetermined location on the tread surface of the tire 3. The wear energy data of the tire 3 may include time-series data of the slippage and shear force acting on a predetermined location on the tread surface of the tire 3, in addition to or instead of the time-series data of wear energy. In such a case, the wear energy acting on the tire 3 at a certain time point can be calculated by the product of the slippage and shear force at the time point, as described above with formula (1).

Any method can be used to calculate the wear energy data of the tire 3. The controller 15 in the server 10 may store an association algorithm between the running data of the vehicle 2 on which the tire 3 is mounted and the wear energy data of the tire 3, in the storage unit 14 in advance. The controller 15 can use the association algorithm to calculate the wear energy data of the tire 3 based on the running data of the vehicle 2 on which the tire 3 is mounted.

The association algorithm used to calculate the wear energy data of the tire 3 is constructed by machine learning. According to the invention, the association algorithm includes one or more computational models constructed by machine learning (described in detail later). The computational model acquires the running data of the vehicle 2 on which the tire 3 is mounted and outputs the wear energy data of the tire 3. Thus, the server 10 can further improve the calculation accuracy of the wear energy data of the tire 3 by machine learning. The association algorithm may include a predetermined relational formula that is not based on a statistical method. The controller 15 may store the calculated wear energy data of the tire 3 in the storage unit 14 in association with the tire identification information of the tire 3.

As one example, the association algorithm may include two computational models 102A and 102B that are executed sequentially.

The first computational model 102A is a computational model for calculating the external force data on the tire 3 based on the running data of the vehicle 2 on which the tire 3 is mounted. That is, the first computational model 102A acquires the running data of the vehicle 2 on which the tire 3 is mounted and outputs the external force data of the external force acting on the tire 3 (also referred to as the external force data (acting) on the tire 3). The external force data on the tire 3 is time-series data representing the force applied to the tire 3. The external force data may be composed of one or more external force components. In this operation example, the external force data is composed of an external force component Fx in the traveling direction of the vehicle 2, an external force component Fy in the rotation axis direction of the tire 3, and an external force component Fz in the vertical direction in a state in which the tire 3 is mounted on the vehicle 2, as illustrated in FIG. 4. Thus, the external force data on the tire 3 can represent the magnitude and direction of each force applied to the tire 3. The number of components constituting the external force data on the tire 3 is not limited to three.

The second computational model 102B is a computational model for calculating the wear energy data of the tire 3 based on the external force data on the tire 3 calculated by the first computational model 102A. That is, the second computational model 102B acquires the external force data on the tire 3 and outputs the wear energy data of the tire 3. The wear energy data of the tire 3 includes time-series data of at least one of wear energy, slippage, or shear force acting on a predetermined location on the tread surface of the tire 3, as mentioned above.

The second computational model 102B may be composed of a plurality of computational models, each for outputting wear energy, slippage, or shear force. In this case, the plurality of computational models may be constructed using different machine learning methods depending on the wear energy data to be output. Alternatively, the plurality of computational models may be constructed using the same machine learning method regardless of the wear energy data to be output.

The two computational models 102A and 102B may further acquire data other than the foregoing data as input. For example, the two computational models 102A and 102B may further acquire tire state data of the tire 3 as input in addition to the foregoing data. In detail, in step S102 in FIG. 3, the controller 15 in the server 10 as the wear energy calculator 152 may calculate the wear energy data of the tire 3 based on the running data of the vehicle 2 on which the tire 3 is mounted and the tire state data of the tire 3. The tire state data of the tire 3 is, for example, time-series data of the internal pressure (air pressure) or temperature of the tire 3, as mentioned above. Hence, the internal pressure or temperature of the tire 3 can be taken into consideration, with it being possible to improve the accuracy of the output by the computational model.

For example, the two computational models 102A and 102B may further acquire information about the tire 3 as input in addition to the foregoing data. In detail, in step S102 in FIG. 3, the controller 15 in the server 10 as the wear energy calculator 152 may calculate the wear energy data of the tire 3 based on the running data of the vehicle 2 on which the tire 3 is mounted and the information about the tire 3. The information about the tire 3 includes at least one of structure information of the tire 3, structure information of the vehicle 2 on which the tire 3 is mounted, or position information of the position of the tire 3 mounted on the vehicle 2, as mentioned above. Even with the same running data, the external force acting on the tire 3 may differ depending on the structure of the tire 3, the structure of the vehicle 2 on which the tire 3 is mounted, the position at which the tire 3 is mounted on the vehicle 2, etc. Moreover, even for tires 3 with the same model number, the external force acting on each tire 3 may differ due to production variation between the tires 3. Hence, the use of the information about the tire 3 can improve the accuracy of the output by the computational model.

Thus, in step S102, the controller 15 in the server 10 as the wear energy calculator 152 preferably calculates the external force data acting on the tire 3 based on the running data of the vehicle 2 on which the tire 3 is mounted, and calculates the wear energy data of the tire 3 based on the external force data acting on the tire 3. By calculating intermediate data such as the external force data acting on the tire 3 and then calculating the wear energy data of the tire 3 in a stepwise manner using a plurality of computational models in this way, it is possible to improve the accuracy and reliability of the calculated numerical value compared to the case where time-series data about the wear energy of the tire 3 is calculated directly from the running data of the vehicle 2 using one computational model. The association algorithm may, however, include any number of computational models, and may be configured to calculate time-series data about the wear energy of the tire 3 directly from the running data of the vehicle 2 using one computational model.

The wear energy, slippage, and/or shear force included in the wear energy data of the tire 3 may each be composed of a plurality of components. In this operation example, in the wear energy data of the tire 3, the wear energy of the tire 3 includes a first wear energy component in a first direction of the tire 3 and a second wear energy component in a second direction perpendicular to the first direction. For example, the first direction is the circumferential direction of the tire 3, and the second direction is the width direction of the tire 3. The wear energy data of the tire 3 can thus represent the magnitude and direction of the wear energy acting on the tire 3. Accordingly, in the wear energy data of the tire 3, each of the slippage and the shear force may also include a component in the first direction and a component in the second direction. The number of components constituting the wear energy data of the tire 3 is not limited to two, and may be any number. The first direction is not limited to the circumferential direction of the tire 3, and may be any direction.

In step S103, the controller 15 in the server 10 as the wear state calculator 153 outputs the wear state of the tire 3 based on the wear energy data of the tire 3.

Any method can be used to calculate the wear state of the tire 3. For example, the controller 15 in the server 10 may store an association algorithm between the wear energy data of the tire 3 and the wear amount of the tire 3 in the storage unit 14 in advance. The controller 15 can use the association algorithm to calculate the wear amount of the tire 3 during a predetermined period based on the total wear energy data of the tire 3 during the period. In this operation example, the controller 15 outputs the remaining groove depth of the tread surface of the tire 3 as the wear state of the tire 3. The controller 15 can calculate the current remaining groove depth of the tire 3 as the current wear state of the tire 3 by subtracting the calculated wear amount of the tire 3 from the initial value of the remaining groove depth of the tread surface of the tire 3. Expressing the wear state of the tire 3 as the remaining groove depth of the tread surface in this way allows the user of the tire wear state prediction system 1 to easily grasp the wear state of the tire 3. The wear state of the tire 3 may be, however, represented by any index, such as the wear amount of the tread surface of the tire 3.

The association algorithm used to calculate the wear state of the tire 3 may be constructed by a statistical method such as machine learning or deep learning, as with the other association algorithms described above. Thus, the server 10 can further improve the calculation accuracy of the wear amount of the tire 3 by machine learning. The association algorithm may include a predetermined relational formula that is not based on a statistical method. The controller 15 may store the calculated wear amount and remaining groove depth of the tire 3 in the storage unit 14 in association with the tire identification information of the tire 3.

In step S103, the controller 15 in the server 10 as the wear state calculator 153 may calculate the wear state of the tire 3 by applying, to the wear energy, a predetermined correction coefficient that differs depending on the tire 3. The predetermined correction coefficient may differ, for example, depending on the information about the tire 3. The information about the tire 3 includes at least one of the structure information of the tire 3, the structure information of the vehicle 2 on which the tire 3 is mounted, or the position information of the tire 3 mounted on the vehicle 2, as mentioned above. Even with the same wear energy acting on the tire 3, the wear amount of the tire 3 may differ depending on the structure of the tire 3 such as the material property of the rubber, the production data specific to the tire 3, or the like. Moreover, even with the same running data, the wear energy acting on the tire 3 may differ depending on the type (roughness) of the road surface on which the vehicle 2 mainly runs, the structure of the vehicle 2 on which the tire 3 is mounted, the position of the tire 3 mounted on the vehicle 2, or the like. By taking these factors into consideration and applying a predetermined correction coefficient that differs depending on the tire 3, it is possible to improve the accuracy of the wear state of the tire 3 calculated by this process. In the case where the wear energy includes the first wear energy component and the second wear energy component as mentioned above, the predetermined correction coefficient may differ between the first wear energy component and the second wear energy component. This can further improve the accuracy of the wear state of the tire 3 calculated by this process.

Referring again to FIG. 3, the controller 15 in the server 10 may output the wear state of the tire 3 calculated in step S103 by any method. For example, the controller 15 may display the wear state of the tire 3 via the output unit 12 such as a display. Alternatively, the controller 15 may transmit a request to display the wear state of the tire 3 to the terminal apparatus 30 via the communication unit 11. In such a case, the terminal apparatus 30 can display the remaining groove depth of the tire 3 as the wear state of the tire 3 via a display or the like based on the request received from the server 10. As a result, the user of the tire wear state prediction system 1 can view the visualized wear state of the tire 3. The tire wear state prediction system 1 can thus improve the usefulness of technology for predicting the wear state of the tire 3. The controller 15 may output intermediate data in the calculation of the wear state of the tire 3, such as the wear energy acting on the tire 3, in addition to the wear state. Presenting not only the wear state of the tire 3 but also the intermediate data in the calculation of the wear state to the user can improve the reliability of the wear state calculated using machine learning or the like.

In step S104, the controller 15 in the server 10 may output an alert if the wear state of the tire 3 is outside a predetermined threshold range. The predetermined threshold range may be associated with at least one of replacement, retreading, or rotation of the tire 3. For example, in the case where the predetermined threshold range is associated with replacement of the tire 3, an alert may be output to prompt replacement of the tire 3 if the wear state of the tire 3 is outside the predetermined threshold range.

Any method can be used to output the alert. The controller 15 in the server 10 may display information or output sound or light via the output unit 12. Alternatively, the controller 15 may transmit a request to output the alert to the terminal apparatus 30 via the communication unit 11. In such a case, the terminal apparatus 30 may output the alert via a display or the like based on the request received from the server 10. As a result, the user of the tire wear state prediction system 1 can be prompted to take action such as replacing, retreading, or rotating the tire 3.

Next, the operation of constructing a computational model by the server 10 will be described with reference to FIG. 5. The wear energy calculator 152 uses two computational models 102A and 102B, as mentioned above. These computational models may be constructed by the model construction unit 154.

In step S201, the controller 15 in the server 10 as the model construction unit 154 generates training (teaching) data for constructing each computational model.

Any method can be used to generate the training data. For example, the controller 15 in the server 10 may generate training data in which past actual measured values corresponding to the input and output in the computational model are explanatory variables and objective variables. Thus, the accuracy of the output by the computational model can be improved by accumulating measurement data. The controller 15 in the server 10 may generate training data in which virtual time-series data generated by simulation are explanatory variables and objective variables in addition to or instead of past actual measured values. For example, it is preferable to generate virtual time-series data holding summary statistics (mean, variance, etc.) by using a known random process method such as Karhunen-Loeve expansion (KL expansion) based on actual vehicle running data and the like. In this way, a highly accurate computational model can be constructed efficiently even in the initial stage when there is little measurement data accumulated. A vehicle running simulator, a three-dimensional tire rolling simulator, etc. may be used to generate the virtual time-series data by simulation. The three-dimensional tire rolling simulator uses isogeometric analysis (IGA), finite element method (FEM), etc.

In step S202, the controller 15 in the server 10 as the model construction unit 154 executes machine learning based on the training data generated in step S201 to construct the computational model.

According to the invention, the second computational model 102B is constructed by machine learning using training data generated by tire rolling simulation. The second computational model 102B is a computational model for calculating the wear energy data of the tire 3 based on the external force data acting on the tire 3, as mentioned above.

Here, to collect actual measured values of external force data and wear energy data, which serve as training data for constructing the second computational model 102B, a tread surface observation test for the tire 3 may be performed using a tread surface observation device. The tread surface observation device is a device that can simulate, on a stand, running of a vehicle on which a tire is mounted, and includes, for example, a high-resolution sampling camera capable of observing the tire tread surface. By measuring the behavior of the tire tread surface with the tread surface observation device, it is possible to acquire the correspondence relationship between the wear energy, which is calculated based on the slippage and shear force occurring on the tire surface, and the wear amount. However, typical tread surface observation devices have limitations on the magnitude and direction of the external force acting on the tire 3 that can be reproduced. For example, typically, a tread surface observation device can stably reproduce acceleration applied to the tire 3 during rolling only up to about 0.1 G to 0.2 G. In the present invention, the magnitude of acceleration is expressed in "G", which is a unit of acceleration based on the standard acceleration of gravity. 1.0 G is 9.80665 m/s². Moreover, the accuracy of the test using the tread surface observation device tends to be higher when the direction of the external force acting on the tire 3 is either the circumferential direction of the tire 3 (the traveling direction of the vehicle 2) or the width direction of the tire 3 (the rotation axis direction of the tire 3). Accordingly, in the tread surface observation test, cases such as where the acceleration is 0.2 G or more and where an external force acts on the tire 3 in a direction oblique to the circumferential direction of the tire 3 cannot be reproduced, and sufficient variation of training data cannot be ensured. By using training data generated by tire rolling simulation in addition to or instead of actual measured values by the tread surface observation test to construct the second computational model 102B (computational model used to calculate wear energy data), sufficient variation of training data can be ensured and the accuracy of the output by the computational model can be improved. Therefore, the training data used to construct the computation model for calculating the wear energy data preferably includes the results of tire rolling simulation when the acceleration is 0.2 G or more. The training data used to construct the computation model more preferably includes the results of tire rolling simulation when the direction of the external force acting on the tire 3 is at an angle of more than 0 degrees and less than 90 degrees with respect to the circumferential direction of the tire 3.

Moreover, the training data used to construct the computation model for calculating the wear energy data preferably includes the results of tire rolling simulation at a plurality of locations on the tread surface of the tire 3. For example, the plurality of locations may be arranged in the tire width direction or in the tire circumferential direction on the tread surface of the tire 3. This reduces the probability that the wear energy data calculated by the computation model is biased to a specific location on the tread surface.

In addition to time-series data such as the running data of the vehicle 2 on which the tire 3 is mounted, any information may be used to construct the computational model in steps S201 and S202. For example, in addition to the running data of the vehicle 2 on which the tire 3 is mounted, information about the tire 3 such as the tire state data of the tire 3, the structure information of the tire 3, the structure information of the vehicle 2 on which the tire 3 is mounted, or the position information of the tire 3 mounted on the vehicle 2 may be used. Furthermore, for example, outdoor temperature data or production data specific to the tire 3 may be used. The outdoor temperature data is, for example, data of the air temperature, humidity, or precipitation at the location where the vehicle 2 on which the tire 3 is mounted is located. This can improve the accuracy of the output of the computational model constructed by machine learning.

As described above, in this embodiment, the server 10 as a tire wear state prediction apparatus comprises: the data acquisition unit 151 configured to acquire running data of the vehicle 2 on which the tire 3 is mounted; the wear energy calculator 152 configured to calculate wear energy data that is time-series data about the wear energy of the tire 3 based on the running data of the vehicle 2 on which the tire 3 is mounted; and the wear state calculator 153 configured to output the wear state of the tire 3 based on the wear energy data of the tire 3.

With this structure, instead of calculating the wear state of the tire directly from the running data of the vehicle 2 on which the tire 3 is mounted, the server 10 calculates the wear state of the tire in a stepwise manner by generating intermediate data such as the wear energy acting on the tire 3. This can improve the accuracy and reliability of the calculated wear state. Thus, the server 10 according to the present invention can improve the usefulness of technology for predicting the wear state of the tire 3.

While the presently disclosed technology has been described above by way of embodiments and drawings, various changes and modifications can be made by those of ordinary skill in the art based on the present invention. Such changes and modifications are therefore included in the scope of the present invention.

For example, although the above embodiment describes the case where a controller 15 in one server 10 operates as the data acquisition unit 151, the wear energy calculator 152, the wear state calculator 153, and the model construction unit 154, the present invention is not limited to such. A plurality of controllers 15 and servers 10 specialized for the respective operations may be provided.

For example, although the above embodiment describes the case where the wear energy data of the tire 3 is calculated using two computational models 102A and 102B executed sequentially, the present invention is not limited to such. The wear energy data of the tire 3 may be calculated using any number of computational models, i.e. one or more computational models. For example, the wear energy data of the tire 3 may be calculated using one computational model that acquires the running data of the vehicle 2 on which the tire 3 is mounted and outputs the wear energy data of the tire 3.

For example, an embodiment is also possible in which a general-purpose computer functions as the server 10 according to the above embodiment. Specifically, a program describing the processes for achieving the functions of the server 10 according to the above embodiment is stored in a memory in the general-purpose computer, and read and executed by a processor in the general-purpose computer. Thus, the present invention can also be implemented as a program executable by a processor, or a non-transitory computer-readable medium storing the program. Examples of the non-transitory computer-readable medium include magnetic recording devices, optical discs, magnetooptical recording media, and semiconductor memories.

### INDUSTRIAL APPLICABILITY

It is thus possible to provide a tire wear state prediction apparatus, tire wear state prediction method, and program that can improve the usefulness of technology for predicting the wear state of tires.

### [Contribution to the United Nations-led Sustainable Development Goals (SDGs)]

The SDGs have been proposed to create a sustainable society. An embodiment of the present invention is considered to be a technology that can contribute to "No. 12 Responsible Consumption and Production", "No. 13 Climate Action", etc.

### REFERENCE SIGNS LIST

- 1: tire wear state prediction system
- 2: vehicle
- 3: tire
- 10: server (tire wear state prediction apparatus)
- 11: communication unit
- 12: output unit
- 13: input unit
- 14: storage unit
- 15: controller
- 151: data acquisition unit
- 152: wear energy calculator
- 153: wear state calculator
- 154: model construction unit
- 20: measurement apparatus
- 30: terminal apparatus
- 40: network
- 102A, 102B: computational model
- Fx, Fy, Fz: external force component

## Claims

1. A tire wear state prediction apparatus (10) comprising:
a data acquisition unit (151) configured to acquire running data of a vehicle (2) on which a tire (3) is mounted;
a wear energy calculator (152) configured to calculate time-series data of wear energy of the tire (3), based on the running data, and
a wear state calculator (153) configured to output a wear state of the tire (3) based on the time-series data of the wear energy of the tire (3),
**characterised in that**
the wear energy calculator (152) includes a computational model (102A, 102B) constructed by machine learning using training data generated through tire rolling simulation.

2. The tire wear state prediction apparatus (10) according to claim 1, wherein the wear state calculator (153) is configured to output a remaining groove depth of a tread surface of the tire (3) as the wear state of the tire (3).

3. The tire wear state prediction apparatus (10) according to claim 1 or 2, wherein the wear energy calculator (152) is configured to:
calculate external force data of an external force acting on the tire (3) based on the running data; and
calculate the time-series data of the wear energy of the tire (3) based on the external force data.

4. The tire wear state prediction apparatus (10) according to claim 1, wherein the training data includes results of the tire rolling simulation at a plurality of locations on a tread surface of the tire (3).

5. The tire wear state prediction apparatus (10) according to claim 1, wherein the training data includes results of the tire rolling simulation when an acceleration applied to the tire (3) during rolling is 0.2 G or more.

6. The tire wear state prediction apparatus (10) according to claim 1, wherein the wear energy of the tire (3) includes a first wear energy component in a first direction of the tire (3) and a second wear energy component in a direction perpendicular to the first direction.

7. The tire wear state prediction apparatus (10) according to claim 6, wherein the wear state calculator (153) is configured to calculate the wear state of the tire (3) by applying, to the wear energy, a predetermined correction coefficient that differs depending on the tire (3), and
the predetermined correction coefficient differs between the first wear energy component and the second wear energy component.

8. A tire wear state prediction method executed by one or more computers (10), the tire wear state prediction method comprising:
acquiring (S101) running data of a vehicle (2) on which a tire (3) is mounted;
calculating (S102) time-series data of wear energy of the tire (3), based on the running data, wherein calculating the time-series data of the wear energy of the tire (3) comprises using a computational model (102A, 102B) constructed by machine learning using training data generated through tire rolling simulation; and
outputting (S103) a wear state of the tire (3) based on the time-series data of the wear energy of the tire (3).

9. A program for causing one or more computers (10) to execute operations, the operations comprising the tire wear prediction method according to claim 8.

## Patentansprüche

1. Einrichtung (10) zur Vorhersage des Reifenverschleißzustands, umfassend:
eine Datenerfassungseinheit (151), die konfiguriert ist, um Fahrdaten eines Fahrzeugs (2) zu erfassen, an dem ein Reifen (3) montiert ist;
ein Verschleißenergierechner (152), der konfiguriert ist, um basierend auf den Fahrdaten Zeitreihendaten von Verschleißenergie des Reifens (3) zu berechnen.
und
ein Verschleißzustandsrechner (153), der konfiguriert ist, um einen Verschleißzustand des Reifens (3) basierend auf den Zeitreihendaten der Verschleißenergie des Reifens (3) auszugeben,
**dadurch gekennzeichnet, dass**
der Verschleißenergierechner (152) ein Rechenmodell (102A, 102B) beinhaltet, das durch maschinelles Lernen unter Verwendung von Trainingsdaten, die durch Reifenrollsimulationen generiert wurden, erstellt worden ist.

2. Einrichtung (10) zur Vorhersage des Reifenverschleißzustands nach Anspruch 1, wobei der Verschleißzustandsrechner (153) konfiguriert ist, um eine verbleibende Rillentiefe einer Reifenprofiloberfläche des Reifens (3) als den Verschleißzustand des Reifens (3) auszugeben.

3. Einrichtung (10) zur Vorhersage des Reifenverschleißzustands nach Anspruch 1 oder 2, wobei der Verschleißenergierechner (152) konfiguriert ist, um:
externe Kraftdaten einer auf den Reifen (3) wirkenden externen Kraft basierend auf den Fahrdaten zu berechnen; und
die Zeitreihendaten der Verschleißenergie des Reifens (3) basierend auf den externen Kraftdaten zu berechnen.

4. Einrichtung (10) zur Vorhersage des Reifenverschleißzustands nach Anspruch 1, wobei die Trainingsdaten Ergebnisse der Reifenrollsimulation an einer Vielzahl von Stellen auf der Reifenprofiloberfläche des Reifens (3) beinhalten.

5. Einrichtung (10) zur Vorhersage des Reifenverschleißzustands nach Anspruch 1, wobei die Trainingsdaten Ergebnisse der Reifenrollsimulation beinhalten, wenn eine beim Rollen auf den Reifen (3) angewendete Beschleunigung 0,2 G oder größer ist.

6. Einrichtung (10) zur Vorhersage des Reifenverschleißzustands nach Anspruch 1, wobei die Verschleißenergie des Reifens (3) eine erste Verschleißenergiekomponente in einer ersten Richtung des Reifens (3), und eine zweite Verschleißenergiekomponente in einer Richtung senkrecht zur ersten Richtung beinhaltet.

7. Einrichtung (10) zur Vorhersage des Reifenverschleißzustands nach Anspruch 6, wobei der Verschleißzustandsrechner (153) konfiguriert ist, um den Verschleißzustand des Reifens (3) durch Anwenden eines vorbestimmten Korrekturkoeffizienten auf die Verschleißenergie zu berechnen, der je nach Reifen (3) unterschiedlich ist, und
sich der vorbestimmte Korrekturkoeffizient zwischen der ersten Verschleißenergiekomponente und der zweiten Verschleißenergiekomponente unterscheidet.

8. Verfahren zur Vorhersage des Reifenverschleißzustands, das von einem oder mehreren Computern (10) ausgeführt wird, wobei das Verfahren zur Vorhersage des Reifenverschleißzustands umfasst:
Erfassen (S101) von Fahrdaten eines Fahrzeugs (2), an dem ein Reifen (3) montiert ist;
Berechnen (S102) von Zeitreihendaten von Verschleißenergie des Reifens (3) basierend auf den Fahrdaten, wobei Berechnen der Zeitreihendaten der Verschleißenergie des Reifens (3) Verwenden eines Rechenmodells (102A, 102B) umfasst, das durch maschinelles Lernen unter Verwendung von Trainingsdaten erstellt wurde, die durch Reifenrollsimulationen generiert wurden; und
Ausgeben (S103) eines Verschleißzustands des Reifens (3) basierend auf den Zeitreihendaten der Verschleißenergie des Reifens (3).

9. Programm, um einen oder mehrere Computer (10) zu veranlassen, Operationen auszuführen, wobei die Operationen das Verfahren zur Vorhersage des Reifenverschleißzustands nach Anspruch 8 umfassen.

## Revendications

1. Appareil de prédiction de l'état d'usure des pneumatiques (10) comprenant :
une unité d'acquisition de données (151) configurée pour acquérir des données de fonctionnement d'un véhicule (2) sur lequel un pneu (3) est monté ;
un calculateur d'énergie d'usure (152) configuré pour calculer des données chronologiques de l'énergie d'usure du pneu (3), sur la base des données de fonctionnement,
et
un calculateur d'état d'usure (153) configuré pour délivrer un état d'usure du pneu (3) sur la base des données chronologiques de l'énergie d'usure du pneu (3),
**caractérisé en ce que**
le calculateur d'énergie d'usure (152) inclut un modèle de calcul (102A, 102B) construit par apprentissage automatique à l'aide de données d'entraînement générées par simulation de roulement de pneus.

2. Appareil de prédiction de l'état d'usure des pneumatiques (10) selon la revendication 1, dans lequel le calculateur d'état d'usure (153) est configuré pour délivrer une profondeur de rainure restante d'une surface de bande de roulement du pneu (3) comme état d'usure du pneu (3).

3. Appareil de prédiction de l'état d'usure des pneumatiques (10) selon la revendication 1 ou 2, dans lequel le calculateur d'énergie d'usure (152) est configuré pour :
calculer des données de force externe d'une force externe agissant sur le pneu (3) sur la base des données de fonctionnement ; et
calculer les données chronologiques de l'énergie d'usure du pneu (3) sur la base des données de force externe.

4. Appareil de prédiction de l'état d'usure des pneumatiques (10) selon la revendication 1, dans lequel les données d'entraînement incluent des résultats de la simulation de roulement du pneu à une pluralité d'emplacements sur une surface de bande de roulement du pneu (3).

5. Appareil de prédiction de l'état d'usure des pneumatiques (10) selon la revendication 1, dans lequel les données d'entraînement incluent des résultats de la simulation de roulement du pneu lorsqu'une accélération appliquée au pneu (3) pendant le roulement est de 0,2 G ou plus.

6. Appareil de prédiction de l'état d'usure des pneumatiques (10) selon la revendication 1, dans lequel l'énergie d'usure du pneu (3) inclut une première composante d'énergie d'usure dans une première direction du pneu (3) et une seconde composante d'énergie d'usure dans une direction perpendiculaire à la première direction.

7. Appareil de prédiction de l'état d'usure des pneumatiques (10) selon la revendication 6, dans lequel le calculateur d'état d'usure (153) est configuré pour calculer l'état d'usure du pneu (3) en appliquant, à l'énergie d'usure, un coefficient de correction prédéterminé qui diffère selon le pneu (3), et
le coefficient de correction prédéterminé diffère entre la première composante d'énergie d'usure et la seconde composante d'énergie d'usure.

8. Procédé de prédiction de l'état d'usure des pneumatiques exécuté par un ou plusieurs ordinateurs (10), le procédé de prédiction de l'état d'usure des pneumatiques comprenant :
l'acquisition (S101) de données de fonctionnement d'un véhicule (2) sur lequel un pneu (3) est monté ;
le calcul (S102) de données chronologiques de l'énergie d'usure du pneu (3), sur la base des données de fonctionnement, dans lequel le calcul des données chronologiques de l'énergie d'usure du pneu (3) comprend l'utilisation d'un modèle de calcul (102A, 102B) construit par apprentissage automatique à l'aide de données d'entraînement générées par simulation de roulement du pneu ; et
la délivrance (S103) d'un état d'usure du pneu (3) sur la base des données chronologiques de l'énergie d'usure du pneu (3).

9. Programme pour amener un ou plusieurs ordinateurs (10) à exécuter des opérations, les opérations comprenant le procédé de prédiction de l'état d'usure des pneus selon la revendication 8.
